Europäisches Patentamt

European Patent Office

Office européen des brevets

(19)

(11) Publication number: **0 089 222**
**B1**

# EUROPEAN PATENT SPECIFICATION

(45) Date of publication of patent specification: **22.10.86**

(21) Application number: **83301407.9**

(22) Date of filing: **15.03.83**

(51) Int. Cl.⁴: **B 65 G 39/071,** G 03 G 15/00, F 16 C 13/00

(54) **Apparatus for supporting a belt.**

(30) Priority: **15.03.82 US 358485**

(43) Date of publication of application: **21.09.83 Bulletin 83/38**

(45) Publication of the grant of the patent: **22.10.86 Bulletin 86/43**

(84) Designated Contracting States: **DE FR GB IT**

(56) References cited:
EP-A-0 015 686
FR-A-1 274 887
US-A-3 219 176
US-A-3 339 818
US-A-3 643 791
US-A-3 961 736

(73) Proprietor: **XEROX CORPORATION**
**Xerox Square - 020**
**Rochester New York 14644 (US)**

(72) Inventor: **Langenheim, Richard H.**
**596 Whiting Road**
**Webster New York 14580 (US)**

(74) Representative: **Frain, Timothy John et al**
**c/o Rank Xerox Limited Patent Department**
**Rank Xerox House 338 Euston Road**
**London NW1 3BH (GB)**

Courier Press, Leamington Spa, England.

## Description

This invention relates generally to an apparatus for supporting a belt arranged to move in a pre-determined path and for controlling lateral movement of the belt from the pre-determined path according to the preamble of claim 1. An apparatus of this type is frequently employed in an electrophotographic printing machine where it is necessary to control the lateral movement of the belt to closely prescribed tolerances.

Generally, an electrophotographic printing machine includes a photoconductive member which is charged to a substantially uniform potential to sensitize the surface thereof. The charged portion of the photoconductive surface is exposed to a light image of an original document being reproduced. This records an electrostatic latent image on the photoconductive surface corresponding to the informational areas contained within the original document being reproduced. After the electrostatic latent image is recorded on the photoconductive member, the latent image is developed by bringing a developer mix of carrier granules and toner particles into contact therewith. The toner particles are attracted from the carrier granules to the latent image forming a toner powder image on the photoconductive member. The toner powder image is then transferred from the photoconductive member to a copy sheet. Finally, the toner particles are heated permanently affixing them to the copy sheet in image configuration. This general approach was disclosed by Carlson in U.S. Patent No. 2,297,691 and has been further amplified and described by many related patents in the art.

It is apparent that the location of the latent image recorded on the photoconductive belt must be precisely defined in order to have the various processing stations acting thereon optimize copy quality. To this end, it is critical that the lateral alignment of the photoconductive belt be controlled within prescribed tolerances. Only in this manner will the photoconductive belt move through a pre-determined path so that the processing stations disposed thereabout will be located precisely relative to the latent image recorded thereon.

When considering control of the lateral movement of the belt, it is well known that if the belt were perfectly constructed and entrained about perfect cylindrical rollers mounted and secured in an exactly parallel relationship with one another, there would be no lateral movement of the belt. In actual practice, however, this is not feasible. Due to the imperfections in the system geometry, the belt velocity vector is not normal to the roller axis of rotation, and the belt will move laterally relative to the roller until reaching a kinematically stable position. Existing methods of controlling belt lateral movement comprise servo systems, crowned rollers, and flanged rollers. In any control system it is necessary to prevent high local stresses which may result in damage to the highly sensitive photoconductive belt. Active systems, such as servo systems employing steering rollers apply less stress on the belt. However, active systems of this type are generally complex and costly. Passive systems, such as flanged rollers, are less expensive but generally produce high stresses. Various types of flanged roller systems have hereinbefore been developed to improve the support and tracking of photoconductive belts. For example, the drive roller may have a pair of flanges secured to opposed ends thereof. If the photoconductive belt moves laterally, and engages one of the flanges, it must be capable of either sliding laterally with respect to the roller system, or locally deforming either itself or the roller system to maintain its position. The edge force required to shift the belt laterally or locally deform itself or the roller system usually greatly exceeds the maximum tolerable edge force. Thus, the belt would start to buckle resulting in failure of the system. Belt edge forces are large because the system rollers have low lateral compliance and a large coefficient of friction. A system of this type has an exeedingly short life and is not satisfactory for controlling lateral movement of the sensitive photoconductive belt in an electrophotographic printing machine environment.

Alternatively, the flanges may be mounted on one of the idler rollers rather than the drive roller. Lateral motion is controlled by bending the belt to change the approach angle to the drive roller. A system of this type may develop lower edge forces when compared to one having the flanges mounted on the drive roller. However, the primary risks associated with this system are that the performance depends significantly on the belt bending in its plane. Though the forces in this type of a system are often reduced, they still appear to be unacceptable in that they generally exceed the belt buckling force. Thus, the side edge of the photoconductive belt buckles eventually reducing the life thereof.

It is, therefore, apparent that it is highly desirable to develop a flanged roller system which produces small edge forces. This may be accomplished by utilizing a roller having significant surface compliance so that lateral belt motion relative to the roller can be accommodated by laterally moving the roller surface. Relative lateral motion between the belt and roller will then be due to beinding rather than slipping. However, it is also necessary in a system of this type to prevent the formation of small permanent corrugations in the photoconductive belt. The time averaged location of transient corrugations produced while the belt is in contact with the roller tends to form the small permanent corrugations in the belt. Corrugations of this type will result in copy quality degradation in that they are generally reproduced as striations in the resultant copy.

Various types of steering rollers have been devised to control belt lateral movement. The following references appear to be relevant:

U.S. Patent No. 2,925,168
Patentee: Lorig

Issued: February 16, 1960

U.S. Patent No. 3,050,178
Patentee: Stone
Issued: August 21, 1962

U.S. Patent No. 3,219,176
Patentee: Kindig
Issued: November 23, 1965

U.S. Patent No. 3,334,447
Patentee: Leveque
Issued: August 8, 1967

U.S. Patent No. 3,643,791
Patentee: Thornsbery
Issued: February 22, 1972

U.S. Patent No. 3,726,588
Patentee: Moser
Issued: April 10, 1973

U.S. Patent No. 3,961,736
Patentee: Fatula
Issued: June 8, 1976

U.S. Patent No. 3,980,174
Patentee: Conrad
Issued: September 14, 1976

U.S. Patent No. 4,150,773
Patentee: Fe' et al.
Issued: April 24, 1979

U.S. Patent No. 4,221,480
Patentee: Spehrley, Jr.
Issued: September 9, 1980

The relevant portions of these patents may be briefly summarized as follows:

Lorig discloses a belt support pulley comprising a rubber sleeve mounted on a shaft for rotation therewith. The sleeve has a plurality of flexible laminations on its outer periphery arranged on both sides of a transverse central plane with the laminations being inclined radially toward the axis of the roll away from the transverse plane. The laminations are formed by means of slits or slots extending annularly or helically around the periphery of the roll surface.

Stone describes a conveyor belt having a plurality of randomly oriented recesses in the undersurface thereof. A pulley having projections thereon supports the belt such that some of the projections contacting the undersurface of the belt will engage some of the recesses for providing traction to the belt.

Kindig teaches a belt idler comprising a plurality of spaced discs. Each disc is formed with a rigid hub and a flexible portion extending radially outwardly therefrom. The flexible portion of each hub is inclined relative to the axis of the shaft and has a conical configuration. The group of discs assembled on each side of the transverse center line of the idler have their flexible portions inclined towards the transverse center line.

Leveque describes a pulley having a series of radially outwardly extending flexible ribs arranged circumferentially of the pulley and located in side-by-side spaced relation longitudinally of the pulley. The ribs form a flexible or floating surface which is the operative surface of the pulley engagable by the belt. When the pulley attempts to ride sideways into engagement with the pulley flange or to ride off the pulley, these ribs flex laterally while in engagement with the belt. When these ribs become disengaged from the belt (during rotation of the pulley), they resume their normal radial position so as to again be ready to engage the belt during rotation of the pulley.

Thornsbery discloses a roller for automatically centering a belt. The roller includes a shaft having a rubber sleeve mounted thereon. A circumferential slot is formed in the sleeve at the transverse central plane of the roll. Two helical slots are formed in the sleeve. One of the slots has a right-hand lay and extends from one end of the roll to the midpoint thereof, while, the other has a left-hand lay and extends from the other end of the roll to its midpoint. The slots are inclined radially toward the axis of the roll away from the transverse center.

Moser describes a steering roller for a belt. The roller has two axial chambers and an elastomeric surface. Fluid pressure is selectively applied to either chamber in response to lateral movement of the belt to tilt the roll surface. This corrects the belt alignment.

Fatula describes a self-centering roll comprising a tube having a first rubber sleeve mounted thereon. A seamed rubber sleeve is mounted on the first sleeve. The second rubber sleeve has the central slot and spaced apart slots in each side of the central slot. The slots in each side of the central slot are inclined radially toward the roll axis away from the central slot.

Conrad teaches a pair of spaced pulleys supporting an endless belt. Each pulley includes a plurality of spaced grooves which mesh with ribs protruding inwardly from the interior surface of the belt.

Fell et al. describes a deflection roller having a cylindrical sleeve with a plurality of foam rubber or plastic rings secured thereto.

Spehrley, Jr. describes a roller having a plurality of spaced, flexible discs extending outwardly from the exterior surface thereof. A pair of opposed, spaced circular flanges are mounted on either end of the roller. The belt passes between the flanges and is supported by the discs on the roller. A plurality of grooves are formed in the discs extending in the direction substantially parallel to the longitudinal axis of the roller. These grooves decouple portions of each disc from one another. As the belt moves in a lateral direction, it engages the flanges. Relative movement of the belt in the lateral direction, deflects the portion of the disc supporting the belt. The remaining portion of each disc, not in contact with the belt, remains underformed. This insures that the maximum force applied on the edge of the belt never exceeds the buckling force.

An apparatus for supporting a belt and having the Features set out below according to the precharacterising portion of claim 1 is known from EP—A—15686.

In accordance with one aspect of the present invention, there is provided an apparatus for supporting a belt arranged to move in a pre-determined path and for controlling lateral movement of the belt from the pre-determined path. The apparatus includes at least one rotatably mounted roller comprising a flexible outer sleeve having at least one slot (70) having the configuration of at least a part of a single-handed spiral extending around at least a portion of the periphery of the roller from one end of the roller to the other end thereof with the flexible outer sleeve having a plurality of spaced grooves therein. The grooves extend in the direction substantially parallel to the longitudinal axis of the roller from one end of the roller to the other end thereof. In this manner, the grooves decouple segments of the flexible outer sleeve from one another with at least one segment of the flexible outer sleeve contacting the region of the belt passing thereover to provide support therefor. Means are provided for preventing substantial lateral movement of the belt from the pre-determined path with the segment of the flexible outer sleeve supporting the belt being deflected and returning to a substantially undeflected condition when not supporting the belt.

Pursuant to another aspect of the present invention, there is provided an electrophotographic printing machine of the type having an endless photoconductive belt arranged to move in a pre-determined path, including apparatus for supporting the photoconductive belt and controlling lateral movement thereof from the pre-determined path as described above.

In order that the present invention may be more readily understood, reference will now be made to the accompanying drawings, in which:

Figure 1 is a schematic elevational view depicting an electrophotographic printing machine incorporating the present invention therein.

Figure 2 (a) is an elevational view showing the drive roller employed in the belt support system of the Figure 1 printing machine;

Figure 2 (b) is an elevational view showing the side of the Figure 2 (a) drive roller;

Figure 3 (a) is an enlarged, fragmentary, schematic elevational view showing the belt moving laterally along the Figure 2 (a) drive roller;

Figure 3 (b) is an enlarged, fragmentary, schematic elevational view illustrating the belt contacting an edge guide of the Figure 2 (a) roller;

Figure 3 (c) is an enlarged, fragmentary, schematic elevational view depicting deflection of segments of the flexible outer sleeve of the Figure 2 (a) roller;

Figure 4 is a fragmentary, elevational view showing another embodiment of the Figure 2 (a) roller;

Figure 5 is a fragmentary, elevational view showing still another embodiment of the Figure 2 (a) roller;

Figure 6 depicts the footprint of the Figure 2 (a) roller;

Figure 7 shows the footprint of the Figure 4 roller; and

Figure 8 illustrates the footprint of the Figure 5 roller.

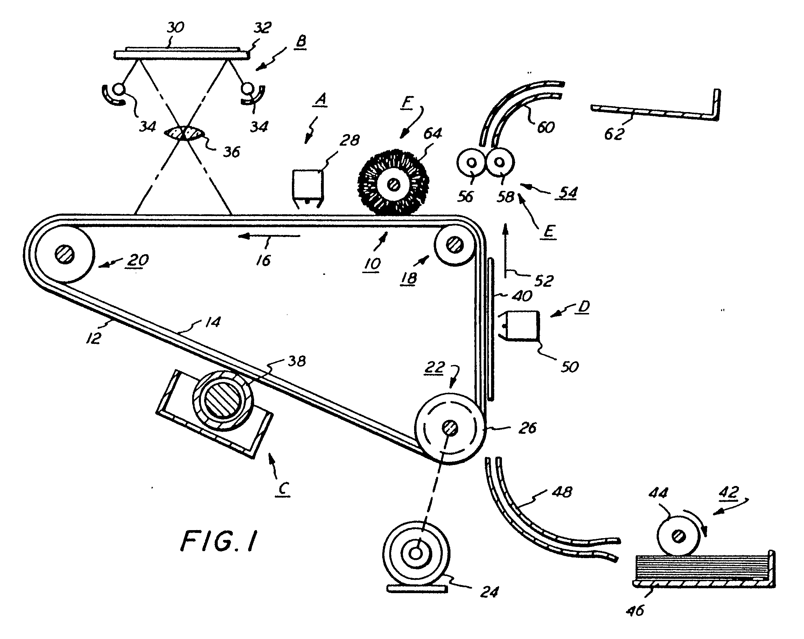

Figure 1 schematically depicts the various components of an illustrative electrophotographic printing machine incorporating the belt support and control apparatus of the present invention therein. It will become evident from the following discussion that the belt support and control apparatus is equally well suited for use in a wide variety of devices and is not necessarily limited in its application to the particular embodiments shown herein. For example, the apparatus of the present invention may be readily employed in magnetic tape systems, motion picture cameras and motion picture projectors, amongst others.

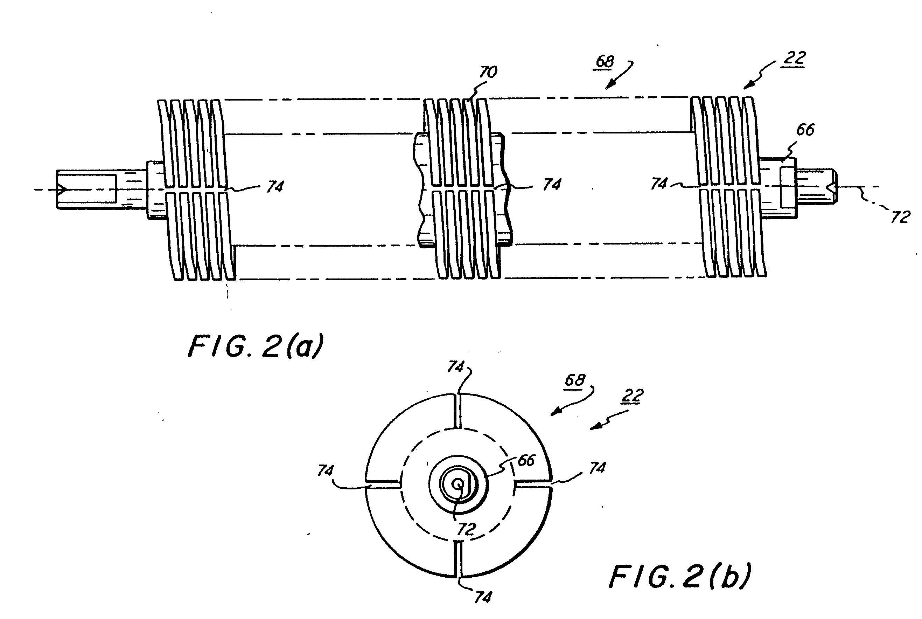

As shown in Figure 1, the electrophotographic printing machine employs a belt having a photoconductive surface 12 deposited on a conductive substrate 14. Preferably, photoconductive surface 12 is made from a selenium alloy with conductive substrate 14 being made from an aluminum alloy. Conductive substrate 14 is electrically grounded. Belt 10 moves in the direction of arrow 16 to advance successive portions of photoconductive surface 12 sequentially through the various processing stations disposed about the path of movement thereof. As depicted, belt 10 is entrained about stripping roller 18, tension roller 20 and drive roller 22. The detailed structure of drive roller 22 will be described hereinafter with reference to Figures 2 through 8, inclusive. Although only the detailed structure of drive roller 22 will be described, stripping roller 18 and tension roller 20 may also be constructed in an identical manner, the only distinctions being that their respective diameters may be different.

Drive roller 22 is mounted rotatably and in engagement with belt 10. Motor 24 rotates roller 22 to advance belt 10 in the direction of arrow 16. Roller 22 is coupled to motor 24 by suitable means, suuch as a belt drive. Drive roller 22 includes a pair of opposed, spaced flanges or edge guides 26. Edge guides 26 are mounted on opposed ends of drive roller 22 defining a space therebetween which determines the desired pre-determined path of movement for belt 10. Edge guides 26 extend in an upwardly direction from the surface of roller 22. Preferably, edge guides 26 are circular members or flanges. Belt 10 is maintained in tension by a pair of springs (not shown) resiliently urging tension roller 20 against belt 10 with the desired spring force. Both stripping roller 18 and tension roller 20 are mounted rotatably. These rollers are idlers which rotate freely as belt 10 moves in the direction of arrow 16.

With continued reference to Figure 1, initially a portion of belt 10 passes through charging station A. At charging station A, a corona generating device, indicated generally by the reference numeral 28, charges photoconductive surface 12 of belt 10 to a relatively high, sustantially uniform potential.

Next, the charged portion of photoconductive surface 12 is advanced through exposure station B. At exposure station B, an original document 30 is positioned facedown upon transparent platen 32. Lamps 34 flash light rays onto original document 30. The light rays reflected from original document 30 are transmitted through lens 36 forming a light image thereof. The light image is projected onto the charged portion of photoconductive surface 12 to selectively dissipate the charge thereon. This records an electrostatic latent image on photoconductive surface 12 which corresponds to the informational areas contained in original document 30.

Thereafter, belt 10 advances the electrostatic latent image recorded on photoconductive surface 12 to development station C. At development station C, a magnetic brush developer roller 38 advances the developer mix into contact with the electrostatic latent image. The latent image attracts the toner particles from the carrier granules forming a toner powder image on photoconductive surface 12 of belt 10.

Belt 10 then advances the toner powder image to transfer station D. At transfer station D, a sheet of support material 40 is moved into contact with the toner powder image. The sheet of support material is advanced to transfer station D by a sheet feeding apparatus 42. Preferably, sheet feeding apparatus 42 includes a feed roll 44 contacting the uppermost sheet of stack 46. Feed roll 44 rotates to advance the uppermost sheet from stack 46 into chute 48. Chute 48 directs the advancing sheet of support material into contact with photoconductive surface 12 of belt 10 in a timed sequence so that the toner powder image developed thereon contacts the advancing sheet of support material at transfer station D. Transfer station D includes a corona generating device 50 which sprays ions onto the back side of sheet 40. This attracts the toner powder image from photoconductive surface 12 to sheet 40. After transfer, the sheet continues to move in the direction of arrow 52 onto a conveyor (not shown) which advances the sheet to fusing station E.

Fusing station E includes a fuser assembly indicated generally by the reference numeral 54, which permanently affixes the transferred toner powder image to sheet 40. Preferably, fuser assembly 54 includes a heated fuser roller 56 and back-up roller 58. Sheet 40 passes between fuser roller 56 and back-up roller 58 with the toner powder image contacting fuser roller 56. In this manner, the toner powder image is permanently affixed to sheet 40. After fusing, chute 60 guides the advancing sheet 40 to catch tray 62 for removal from the printing machine by the operator.

Invariably, after the sheet of support material is separated from photoconductive surface 12 of belt 10, some residual particles remain adhering thereto. These residual particles are removed from photoconductive surface 12 at cleaning station F. Cleaning station F includes a rotatably mounted fibrous brush 64 in contact with photoconductive surface 12. The particles are cleaned from photoconductive surface 12 by the rotation of brush 64 in contact therewith. Subsequent to cleaning, a discharge lamp (not shown) floods photoconductive surface 12 with light to dissipate any residual electrostatic charge remaining thereon prior to the charging thereof for the next successive imaging cycle.

Referring now to the specific subject matter of the present invention, Figure 2 (a) depicts drive roller 22 in greater detail. Drive roller 22 includes a substantially rigid shaft 66 having a flexible outer sleeve 68 secured thereon. Preferably, sleeve 68 is cylindrical. Sleeve 68 has a spiral slot 70 extending from the exterior circumferential surface thereof to a diameter greater than the diameter of shaft 66. This defines a spiral slot 70 extending from one end of roller 22 to the other end thereof. Preferably, spiral slot 70 is helical. The pitch of helical slot 70 is preferably about 3.7. The width of slot 70 is preferably about 1.2 millimeters. The distance between the same points in adjacent slots 70, in a direction substantially parallel to longitudinal axis 72 of shaft 66, is preferably about 3.7 millimeters. It is thus seen that the pitch is equal to the distance between the same points in adjacent slots, in a direction substantially parallel to longitudinal axis 72. The depth of slot 70 is preferably about 9.6 millimeters. The cross-sectional configuration of slot 70 is such that the belt normal force applied to the outer sleeve is opposed by an equal and opposite force with substantially no force component being parallel to longitudinal axis 72. Flexible outer sleeve 68 has four substantially equally spaced grooves 74 extending in a direciton substantially parallel to longitudinal axis 72 of shaft 66. Grooves 74 are shown more clearly in Figure 2 (b). As depicted thereat, grooves 74 are angularly spaced from one another a distance of about 90° with each groove being about 1 millimeter wide and about 9.6 millimeters deep. Preferably, shaft 66 is made from steel with sleeve 68 being made from rubber. A combination of slot 70 and groove 74 divide sleeve 68 into segments, with each segment being essentially decoupled from one another, i.e. the bending and deflecting of one segment has little or no effect on the other segments. Each segment has a height to thickness ratio of about 4. Thus, each segment is flexible and bends in a manner similar to that of cantilever beam with each segment being unbiased as to the direction of bending.

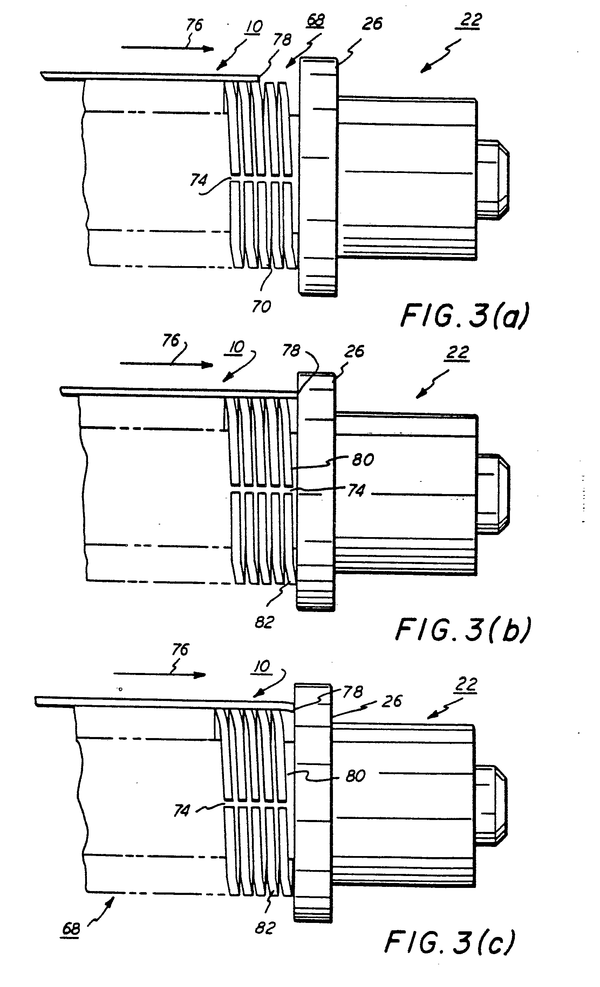

Referring now to Figures 3 (a) through 3 (c), inclusive, the manner in which drive roller 22 prevents lateral movement of belt 10 will be described. While only the operation of drive roller 22 will be described, one skilled in the art will appreciate that if the structure of tension roller 20 and stripping roller 18 were similar to drive roller 22, they too will operate in a substantially identical manner.

Turning now to Figure 3 (a), belt 10 is shown moving laterally in the direction of arrow 76 across drive roller 22. A portion of the segments of flexible outer sleeve 68 support belt 10. Edge guide 26 defines the maximum permissible lateral movement of belt 10 in the direction of arrow 76. As belt 10 continues to move in the direction of arrow 76, belt edge 78 engages edge guide 26.

Figure 3 (b) shows edge 78 of belt 10 contacting edge guide 26. Belt 10 is wrapped around sleeve 68. The circumferential portion of the segments of outer sleeve 68 contacting belt 10 are determined by the length of belt 10 wrapped around roller 28, i.e. the wrap angle. As shown, segments 80 of outer sleeve 68 support belt 10 while segments 82 are spaced therefrom. Segments 80 are separated from segments 82 by groove 74. Thus, segments 82 are substantially decoupled from segments 80. The decoupling of one portion of outer sleeve 68 from the other portions thereof is highly significant in controlling the maximum force applied to edge 78 of belt 10 by edge guide 26.

Referring now to Figure 3 (c), as belt 10 continues to move in the direction of arrow 76, a bend forms in the side marginal region of belt 10. As belt 10 bends, segments 80 deflect or bend in a similar manner to that of a cantilever beam. However, segments 82 remains substantially undeflected inasmuch as belt 10 is not in contact therewith and the edge force is not transmitted thereto. As drive roller 22 continues to rotate, segments 80 move away from belt 10 and segments 82 move into contact therewith. Segments 80 return to their undeflected position as they move away from contacting belt 10. Simultaneously, segments 82 move into contact with belt 10 and are deflected. It is thus seen that the segments of sleeve 68 supporting belt 10 bend as edge guide 26 applies an edge force thereon. Each segment is relatively stiff in the circumferential direction and radial direction, but are laterally compliant. The basic action is such that each segment contacting belt 10 bends in response to the edge force, and the bending of these segments allows the belt to move relative to the roller. As the segments supporting the belt move or rotate away from the belt, the segments of the outer sleeve no longer supporting the belt returns to its undeflected position. Only by decoupling segments of the outer sleeve from one another will the foregoing occur. The various segments of the outer sleeve are decoupled from one another by the longitudinally extending grooves formed therein. The segments are designed to be sufficiently compliant to limit the maximum edge force to a value beneath that required to cause the side edge of the belt to buckle. The edge force applied on belt 10 is equal to the sum of the forces produced by the deflection of the segments of the outer sleeve. It is evident that belt 10 is stably constrained at a lateral location which is not in kinematic equilibrium. This is achieved by permitting segments of the outer sleeve to bend laterally for a portion of each roller revolution. Thereafter, the deflected segments of the outer sleeve return to the undeflected or free position so as to prevent a continuous build up of edge forces which would eventually exceed the buckling force on the belt.

It has been found that roller 22 may be readily manufactured. Preferably, the roller is made by molding a block of rubber onto a steel shaft. The outer diameter of the rubber is then ground to the desired dimension. Thereafter, a helical slot is formed therein and the rolls are slit in a longitudinal direction. Preferably, the helical slot is formed when molding the rubber onto the steel shaft. The longitudinally extending groove decouples segments of the outer sleeve from one another. This permits the segments of the outer sleeve supporting the belt to deflect while the segments of the outer sleeve spaced from the belt remain undeflected. It is the foregoing manner of operation which insures that the maximum edge force never approaches that required to buckle the belt.

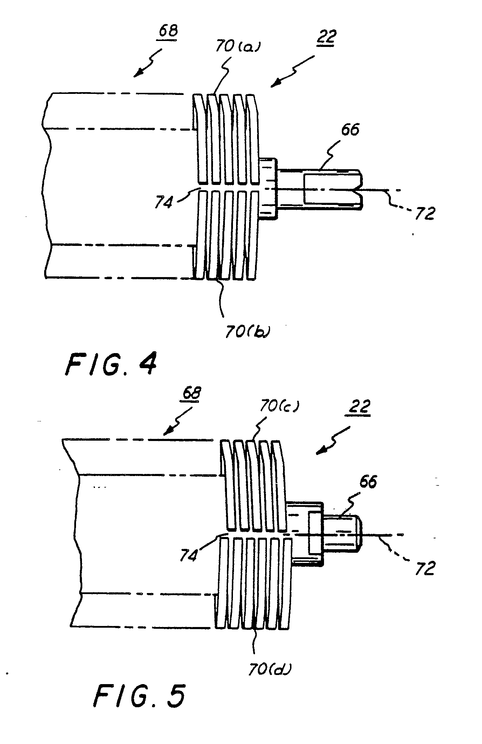

Turning now to Figure 4, there is shown another embodiment of drive roller 22. As shown thereat, outer sleeve 68 has a helical slot (70 (a) formed therein. Helical slot (70 (a) extends about a portion of the periphery of sleeve 68. Preferably, helical slot 70 (a) extends from one side of a plane including longitudinal axis 72 to the other side thereof. Thus, slot 70 (a) extends about 180°. Preferably, helix 70 (a) is a left-handed helix. Another helical slot 70 (b) extending from one side of the plane having longitudinal axis 72 therein to the other side thereof is also formed in sleeve 68. Helical slot (70 (b) is preferably a left-handed helix. Thus, the helix angle of helical slot 70 (a) is in an opposite direction to the helix angle of helical slot 70 (b). Helical slot 70 (a) is separated from helical slot 70 (b) by longitudinal groove 74. The pitch of helical slot (70 (a) is equal to the pitch of helical slot 70 (b). Preferably, the pitch of either helical slot is 7.4, i.e. twice the distance between the same points in adjacent slots, in a direction substantially parallel to longitudinal axis 72. Similarly, the distance between the same points in adjacent slots of helical slot 70 (a) is equal to the distance between the same points adjacent slots of helical slots 70 (b). Other than the foregoing distinctions, the embodiment of roller 22 depicted in Figure 4 is substantially identical to the preferred embodiment depicted in Figure 2 (a) and Figure 2 (b).

Turning now to Figure 5, there is shown still another embodiment of roller 22. As depicted thereat, outer sleeve 68 has a left-hand helical slot 70 (c) and a right-handed helical slot 70 (d) formed therein. Helical slot 70 (d) is offset from helical slot 70 (c) in a direction substantially parallel to the longitudinal axis 72 of shaft 66. The pitch of helical slot 70 (c) is substantially equal to the pitch of helical slot 70 (d). Preferably, the pitch is equal to the distance between the same points in adjacent slots in a direction substantially parallel to longitudinal axis 72. Helical slot 70 (d) is offset from helical slot 70 (c) in a direction substantially parallel to longitudinal axis 72 a distance equal to about one half the distance between the same points in adjacent slots. Once again, helical slot 70 (c) extends about an angle of about 180° from one side of a plane including longitudinal axis 72 to the other side thereof. Similarly, helical slot 70 (d) extends about an angle of about 180° from one side of the plane including longitudinal axis 72 to the other side thereof. Groove 74 separates helical slot 70 (c) from helical slot 70 (d). Other than the foregoing distinctions, the embodiment of roller 22 depicted in Figure 5 is substantially identical to the embodiment thereof depicted in Figures 2 (a) and 2 (b).

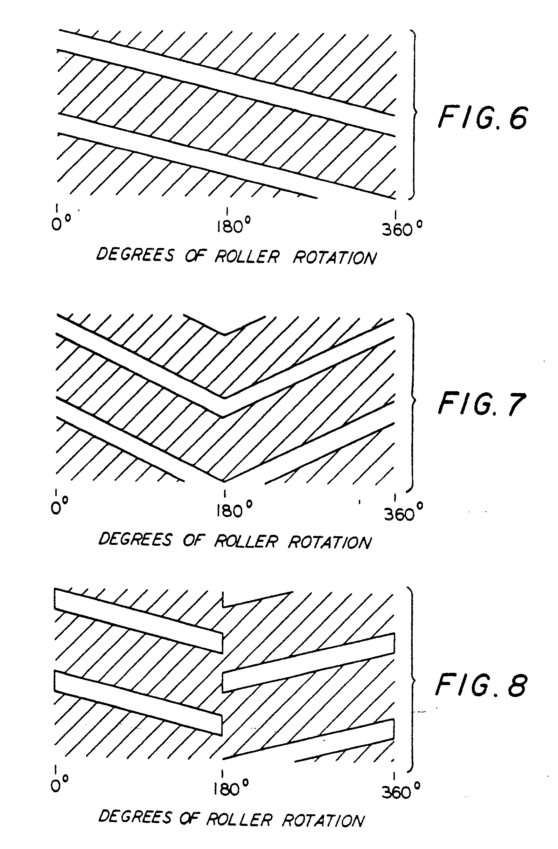

Turning now to Figures 6 through 8, inclusive, there is shown the footprint of the embodiments of roller 22 depicted in Figures 2 (a), 2 (b), 4 and 5. The cross-hatched area corresponds to the portion of the outer sleeve in contact with the belt while the noncross-hatched area corresponds to the helical slot formed therein.

Referring now to Figure 6, the footprint of roller 22, wherein a continuous helical slot is formed therein as depicted in Figures 2 (a) and 2 (b), is shown for a rotation of 360°.

Figure 7 depicts the footprint of the embodiment of roller 22 depicted in Figure 4 wherein one helical slot is right-handed and the other helical slot left-handed. As shown, the helical slot is in one direction from 0° to 180° of rotation of roller 22 and in the opposite direction from 180° to 360° of rotation of roller 22.

Referring now to Figure 8, there is shown the footprint of the embodiment of roller 22 depicted in Figure 5. As illustrated thereat, the helical slot in the roller is in one direction from 0° to 180° and in the opposite direction from 180° to 360° of rotation of roller 22. Furthermore, the helical slot from 0° to 180° is offset in a longitudinal direction from the helical slot formed from 180° to 360° of rotation of roller 22.

It is thus clear by the utilization of various forms of helical slots in the flexible outer sleeve of a belt support roller, the wear, abrasion, cold flow, flexing fatigue, other working of the belt is, over the passage of time, substantially identical along the entire belt. In this way, there is no structural defects relatable to the spatial frequency of the roller segments. Under these circumstances, there are no copy quality defects relatable to the predominate spatial frequency of the roller.

Referring once again to Figure 1, only drive roller 22 is shown as having edge guides 26. One skilled in the art will appreciate that stripping roller 18 and tension roller 20 may also have edge guides. This system will operate satisfactorily with 1, 2 or 3 pair of edge guides. The total edge force exerted on the belt will generally be greater when more than one set of edge guides is used. Each set of edge guides defines a distinct belt path. Thus, each set of edge guides tends to move the belt to a different path increasing the edge force on the belt.

In recapitulation, the roller of the present invention includes a helical slot extending about the periphery thereof from one end to the other end. The helical slot may be one continuous helix or a plurality of helixes with the helix angle of one of the helical slots being in one direction and the helix angle of of the other helical slot being in the opposite direction. Furthermore, the respective helical slots may be offset in a direction substantially parallel to the longitudinal axis of the roller. In addition to forming a helical slot in the flexible outer sleeve of the roller, a plurality of substantially equally spaced longitudinally extending grooves are formed therein. The grooves decouple segments of the outer sleeve from one another. In this way, only the segments supporting the belt are deflected when the side edge of the belt contacts the edge guide. The segments of the outer sleeve not supporting the belt remain undeflected. In this way, the maximum edge force applied to the belt to maintain the belt in the desired path of travel, remains beneath the minimum force required to buckle the belt. The roller of the present invention may produce transient corrugations in the photoconductive belt. However, location of the corrugations is continually changing so that the time averaged location of the corrugation is not constant. This prevents the formation of permanent corrugations in the belt.

## Claims

1. An apparatus for supporting a belt (10) arranged to move in a predetermined path and for controlling lateral movement of the belt (10) from the predetermined path, including at least one rotatably mounted roller (22) comprising a flexible outer sleeve (68) having a plurality of spaced grooves (74) extending in a direction substantially parallel to the longitudinal axis of said roller (22) from one end of said roller to the other end thereof to decouple segments of the flexible sleeve from one another with at least one segment of the flexible outer sleeve (68) contacting the region of the belt (10) passing thereover to provide support therefor, and means (26) for preventing substantial lateral movement of the belt from the predetermined path with the segment of the flexible outer sleeve (68) supporting the belt being deflected and returning to a substantially undeflected condition when not supporting the belt, characterised in that the flexible outer sleeve (68) has at least one slot (70) having the configuration of at least a part of a single-handed spiral extending around at least a portion of the periphery of said roller from one end of said roller to the other end thereof whereby the formation of a pattern of permanent corrugations in the belt is prevented.

2. An apparatus according to claim 1, wherein the spiral slot (70) in the flexible outer sleeve of said roller is a helix, and preferably extends about the entire periphery of said roller (22).

3. An apparatus according to claim 2, wherein the pitch of the helical slot (70) equals the distance between the same points in adjacent slots in a direction substantially parallel to the longitudinal axis of said roller (22).

4. An apparatus according to claim 2, wherein the helical slot in the flexible outer sleeve (68) of said roller (22) includes a first helical slot (70a) extending about one portion of the periphery of said roller (22) from about one side of a plane including the longitudinal axis of said roller to about the other side thereof and a second helical slot (70b) extending about the other portion of the periphery of said roller (22) from about one side of the plane to about the other side thereof with the helix angle of the first helical slot being in an opposite direction to the helix angle of the second helical slot.

5. An apparatus according to claim 4, wherein the first helical slot (70c) is offset from the second helical slot (70d) in a direction substantially parallel to the longitudinal axis of said roller.

6. An apparatus according to claim 4 or 5, wherein the pitch of the first helical slot (70a or 70c) equals the pitch of the second helical slot (70b or 70d), and preferably equals about the distance between the same points in adjacent slots in a direction substantially parallel to the longitudinal axis of said roller.

7. An apparatus according to claim 6, wherein the first helical slot (70c) is offset from the second helical slot (70d) a distance equal to about one-half the distance between the same points in adjacent slots in a direction substantially parallel to the longitudinal axis of said roller.

8. An apparatus according to claim 1, 3, 4, 5 or 8, wherein said preventing means (26) applies a force on the belt (10) to prevent substantial lateral movement of the belt from the pre-determined path, the force applied on the belt (10) by said peventing means preferably being about equal to the force exerted on the belt by the segment of the flexible outer sleeve (68) of said roller being deflected.

9. An apparatus according to claim 8, wherein the force applied on the belt (10) by the segment of the flexible outer sleeve (68) of said roller (22) being deflected is less than the minimum force required to buckle the belt.

10. An apparatus according to claim 9, wherein said preventing means (26) includes a pair of opposed, spaced, preferably substantially circular, flanges, one of said pair of flanges being mounted on one end portion of said roller and the other of said pair of flanges being mounted on the other end portion of said roller, said pair of flanges (26) extending outwardly from said roller beyond the exterior circumferential surface of the flexible outer sleeve (68).

11. An electrophotographic printing machine of the type having an endless photoconductive belt arranged to move in a pre-determined path, including apparatus for supporting the photoconductive belt and controlling lateral movement of the photoconductive belt from the pre-determined path as claimed in any preceding claim.

## Revendications

1. Dispositif pour supporter une courroie (10) agencée de manière à se déplacer dans un trajet prédéterminé et pour commander le déplacement latéral de la courroie (10) par rapport au trajet prédéterminé, comprenant au moins un rouleau (22) monté de manière à pouvoir tourner et comportant un manchon extérieur flexible (68) ayant une multitude de rainures espacées (74) s'étendant dans une direction sensiblement parallèle à l'axe longitudinal du rouleau (22) entre une extrémité du rouleau et son autre extrémité afin de désaccoupler des segments du manchon flexible les uns des autres avec au moins un segment du manchon extérieur flexible (68) en contact avec la zone de la courroie (10) passant dessus afin d'assurer son support, et un moyen (26) pour éviter un déplacement latéral important de la courroie par rapport au trajet prédéterminé avec le segment du manchon extérieur flexible (68) supportant la courroie déformé et revenant à une condition sensiblement non déformée lorsqu'il ne supporte pas la courroie, caractérisé en ce que le manchon extérieur flexible (68) a au moins une fente (70) ayant la forme d'au moins une partie de la spirale à un seul sens qui s'étend autour d'au moins une partie de la périphérie du rouleau entre une extrémité du rouleau et son autre extrémité, d'où il résulte que la formation d'un motif d'ondulations permanentes dans la courroie est empêchée.

2. Dispositif selon la revendication 1, caractérisé en ce que la fente en spirale (70) ménagée dans le manchon extérieur flexible du rouleau est une hélice, et s'étend de préférence sur la totalité de la périphérie du rouleau (22).

3. Dispositif selon la revendication 2, caractérisé en ce que le pas de la fente hélicoïdale (70) est égal à la distance entre des points identiques situés dans des fentes contiguës dans une direction sensiblement parallèle à l'axe longitudinal du rouleau (22).

4. Dispositif selon la revendication 2, caractérisé en ce que la fente hélicoïdale dans le manchon extérieur flexible (68) du rouleau (22) comprend une première fente hélicoïdale (70a) s'étendant sur une partie de la périphérie du rouleau (22) entre approximativement un côté d'un plan passant par l'axe longitudinal du rouleau et approximativement à son autre côté et une seconde fente hélicoïdale (70b) s'étendant sur l'autre partie de la périphérie du rouleau (22) entre approximativement un côté du plan et approximativement son autre côté, avec l'angle de l'hélice de la première fente hélicoïdale ayant une direction opposée à celle de l'angle de l'hélice de la seconde fente hélicoïdale.

5. Dispositif selon la revendication 4, caractérisé en ce que la première fente hélicoïdale (70c) est décalée par rapport à la seconde fente hélicoïdale (70d) dans une direction sensiblement parallèle à l'axe longitudinal du rouleau.

6. Appareil selon la revendication 4 ou la revendication 5, caractérisé en ce que le pas de la première hélice hélicoïdale (70a ou 70c) est égal au pas de la seconde hélice hélicoïdale (70b ou 70d), et de préférence égal à approximativement la distance entre des points identiques situés dans des fentes contiguës dans une direction sensiblement parallèle à l'axe longitudinal du rouleau.

7. Dispositif selon la revendication 6, caractérisé en ce que la première fente hélicoïdale (70c) est décalée par rapport à la seconde fente hélicoïdale (70c) d'une distance égale à environ la moitié de la distance séparant des points identiques situés dans des fentes contiguës dans une direction sensiblement parallèle à l'axe longitudinal du rouleau.

8. Appareil selon les revendications 1, 3, 4, 5 ou 8, caractérisé en ce que le moyen (26) évitant le déplacement latéral applique une force sur la courroie (10) afin d'éviter un déplacement latéral important de la courroie par rapport au trajet prédéterminé, la force appliquée à la courroie (10) par ledit moyen étant de préférence approximativement égale à la force exercée sur la courroie par le segment du manchon extérieur flexible (68) du rouleau qui est déformé.

9. Dispositif selon la revendication 8, caractérisé en ce que la force appliquée à la courroie (10) par le segment du manchon extérieur flexible (68) du rouleau (22) qui est déformé est inférieure à la force minimum nécessaire pour provoquer le gondolement de la courroie.

10. Dispositif selon la revendication 9, caractérisé en ce que le moyen (26) évitant le déplacement comporte une paire de flasque opposés, espacés, de préférence sensiblement circulaires, l'un des flasques de la paire étant monté sur une partie d'extrémité du rouleau et l'autre sur l'autre partie d'extrémité du rouleau, la paire de flasques (26) s'étendant vers l'extérieur du rouleau au-delà de la surface circonférentielle extérieure du manchon extérieur flexible (68).

11. Machine d'impression électrophotographique d'un type comportant une courroie photoconductrice sans fin disposée de manière à se déplacer dans un trajet prédéterminé, comprenant le dispositif pour supporter la courroie photoconductrice et commander le déplacement latéral de la courroie photoconductrice par rapport à un trajet prédéterminé, selon l'une quelconque des revendications précédentes.

**Patentansprüche**

1. Vorrichtung zum Tragen eines Bandes (10), welches zur Bewegung auf einem vorbestimmten Weg angeordnet ist, und zum Steuern der seitlichen Bewegung des Bandes (10) von dem vorbestimmten Weg, mit wenigstens einer drehbar befestigten Rolle (22), die einen nachgiebigen, außeren Überzug (68) umfaßt, der eine Vielzahl von beabstandeten Nuten (74) aufweist, die sich in einer zu der Längsachse der Rolle (22) im wesentlichen parallelen Richtung von einem Ende der Rolle zu deren anderem Ende erstrecken, um Segmente des nachgiebigen Überzuges (68) voneinander zu entkoppeln, wobei wenigstens ein Segment des nachgiebigen, äußeren Überzuges (68) den darüberlaufenden Bereich des Bandes (10) berührt, um dafür eine Abstützung zu schaffen, sowie einer Einrichtung (26), um eine wesentliche seitliche Bewegung des Bandes von dem vorbestimmten Weg zu verhindern, wobei das das Band tragende Segment des nachgiebigen, äußeren Überzuges (68) ausgelenkt wird und in einen im wesentlichen nicht ausgelenkten Zustand zurückkehrt, wenn es das Band nicht trägt, dadurch gekennzeichnet, daß der nachgiebige, äußere Überzug (68) wenigstens einen Schlitz (70) aufweist, der die Ausgestaltung wenigstens eines Teils einer einhändigen Spirale besitzt, die sich um wenigstens einen Abschnitt des Umfangs der Rolle von einem Ende der Rolle zu ihrem anderen Ende erstreckt, wodurch die Ausbildung eines Musters dauerhafter Wellungen in dem Band verhindert wird.

2. Vorrichtung nach Anspruch 1, bei der der Spiralschlitz (70) in dem nachgiebigen, äußeren Überzug der Rolle eine Schraube ist und sich vorzugsweise über den gesamten Umfang der Rolle (22) erstreckt.

3. Vorrichtung nach Anspruch 2, bei der die Ganghöhe des Schraubenschlitzes (70) gleich dem Abstand zwischen gleichen Punkten in benachbarten Schlitzen in einer zu der Längsachse der Rolle (22) im wesentlichen parallelen Richtung ist.

4. Vorrichtung nach Anspruch 2, bei der der Schraubenschlitz in dem nachgiebigen, äußeren Überzug (68) der Rolle (22) einen ersten Schraubenschlitz (70a), der sich über einen Umfangsabschnitt der Rolle (22) von etwa einer Seite der Ebene, die die Längsachse der Rolle enthält, bis ungefähr zur anderen Seite davon erstreckt, und einen zweiten Schraubenschlitz (70b) aufweist, der sich von ungefähr dem anderen Umfangsabschnitt der Rolle (22) von etwa einer Seite der Ebene bis etwa zu deren anderer Seite erstreckt, wobei der Schraubenwinkel des ersten Schraubenschlitzes eine entgegengesetzte Richtung zu dem Schraubenwinkel des zweiten Schraubenschlitzes aufweist.

5. Vorrichtung nach Anspruch 4, bei der der erste Schraubenschlitz (70c) gegenüber dem zweiten Schraubenschlitz (70d) in einer zu der Längsachse der Rolle im wesentlichen parallelen Richtung versetzt ist.

6. Vorrichtung nach Anspruch 4 oder 5, bei der die Ganghöhe des ersten Schraubenschlitzes (70a oder 70c) gleich der Ganghöhe des zweiten Schraubenschlitzes (70b oder 70d) ist und vorzugsweise ungefähr gleich dem Abstand zwischen den gleichen Punkten in benachbarten Schlitzen in einer zu der Längsachse der Rolle im wesentlichen parallelen Richtung ist.

7. Vorrichtung nach Anspruch 6, bei der der erste Schraubenschlitz (70c) gegenüber dem zweiten Schraubenschlitz (70d) um eine Strecke versetzt ist, die ungefähr gleich dem halben Abstand zwischen den Gleichen Punkten in benachbarten Schlitzen in einer zu der Längsachse der Rolle im wesentlichen parallelen Richtung ist.

8. Vorrichtung nach den Ansprüchen 1, 3, 4, 5 oder 8, bei der die Verhinderungseinrichtung (26) eine Kraft auf das Band (10) ausübt, um eine wesentliche seitliche Bewegung des Bandes von dem vorbestimmten Weg zu verhindern, wobei die von der Verhinderungseinrichtung auf das Band (10) ausgeübte Kraft vorzugsweise ungefähr gleich der Kraft ist, die auf das Band durch das ausgelenkte Segment des nachgiebigen, äußeren Überzuges (68) der Rolle ausgeübt wird.

9. Vorrichtung nach Anspruch 8, bei der die auf das Band (10) durch das ausgelenkte Segment des nachgiebigen, äußeren Überzuges (68) der Rolle (22) angewandte Kraft kleiner als die minimale Kraft ist, die zum wellen des Bandes erforderlich ist.

10. Vorrichtung nach Anspruch 9, bei der die Verhinderungseinrichtung (26) ein Paar gegenüberliegender, beabstandeter, vorzugsweise im wesentlichen kreisförmiger Flansche aufweist, wobei einer des Flanschpaares an einem Endabschnitt der Rolle und der andere des Flanschpaares an dem anderen Endabschnitt der Rolle angebracht ist, und daß sich das Flanschpaar (26) nach außerhalb von der Rolle über die äußere Umfangsoberfläche des nachgiebigen, äußeren Überzuges (68) erstreckt.

11. Elektrofotografische Druckmaschine von der Art, die ein endloses, fotoleitfähiges Band aufweist, welches zur Bewegung auf einem vorbestimmten Weg angeordnet ist, mit einer Vorrichtung zum Tragen des fotoleitfähigen Bandes und zum Steuern der seitlichen Bewegung des fotoleitfähigen Bandes von dem vorbestimmten Weg nach einem der vorhergehenden Ansprüche.

FIG.1

0 089 222

FIG. 2(a)

FIG. 2(b)

0 089 222

0 089 222

FIG. 3(a)

FIG. 3(b)

FIG. 3(c)

3

FIG. 4

FIG. 5

0 089 222

FIG. 6

DEGREES OF ROLLER ROTATION

FIG. 7

DEGREES OF ROLLER ROTATION

FIG. 8

DEGREES OF ROLLER ROTATION

5